(19)

**Europäisches Patentamt**

**European Patent Office**

**Office européen des brevets**

(11)  **EP 4 600 774 A1**

(12) **EUROPEAN PATENT APPLICATION**
published in accordance with Art. 153(4) EPC

(43) Date of publication:
**13.08.2025 Bulletin 2025/33**

(21) Application number: **24812055.2**

(22) Date of filing: **19.08.2024**

(51) International Patent Classification (IPC):
**G05D 1/43** *(2024.01)*        **G05D 1/65** *(2024.01)*
**G05D 1/644** *(2024.01)*

(52) Cooperative Patent Classification (CPC):
**G05D 1/65; G05D 1/646;** G05D 2109/10;
Y02T 10/72

(86) International application number:
**PCT/CN2024/112974**

(87) International publication number:
**WO 2025/138911 (03.07.2025 Gazette 2025/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.12.2023  CN 202311803764**

(71) Applicant: Shanghai Allynav Technology Co. Ltd.
Shanghai 201702 (CN)

(72) Inventors:
• **WAN, Fuping**
  **Shanghai 201702 (CN)**
• **LI, Xiaoyu**
  **Shanghai 201702 (CN)**
• **WANG, Rui**
  **Shanghai 201702 (CN)**
• **JU, Dayuan**
  **Shanghai 201702 (CN)**

(74) Representative: **Ipside**
**7-9 Allée Haussmann**
**33300 Bordeaux Cedex (FR)**

(54)    **NEW VEHICLE CONTROL METHOD BASED ON "POLYLINE" PATH**

(57)    This invention discloses a trajectory tracking method for tracked vehicles based on yaw rate, which belongs to the field of autonomous driving technology. This method analyzes the lateral error of the vehicle's current pose geometrically, and combines it with the heading error through weighted calculation to obtain the target deflection angle. The target deflection angle is then converted into the target yaw rate through the vehicle's kinematics and sent to the control mechanism for execution. Based on the above algorithm, real-time feedback control of the vehicle's yaw rate is achieved.

Fig. 1

**EP 4 600 774 A1**

**Description**

**Technical Field**

This invention belongs to the technical field of automatic control, particularly relating to a new vehicle control method based on "polyline" path.

**Background Technology**

The autonomous control of lawn mowers, warehouse logistics vehicles, agricultural machinery, etc., needs to answer 3 basic questions: Where am I? Where am I going? How do I get there? The lateral/longitudinal control of vehicles falls under the scope of the third question. For different scenarios, different lateral/longitudinal control methods need to be provided. Among them, there is a type of "polyline" path scenario corresponding to lateral/longitudinal control, which has a wide range of applications. For the lateral/longitudinal control corresponding to this scenario, there are currently two extremes: The first extreme is that the lateral control is done in detail, but the longitudinal control is not considered comprehensively. Compared with autonomous driving (or assisted driving) that only considers lateral control, the quality of longitudinal control in this type of lateral/longitudinal control for unmanned driving will not only have an important impact on the overall control performance but also affect the service life of the vehicle. The second extreme is to refer to the lateral/longitudinal control method of passenger vehicles, but passenger vehicles face completely unstructured scenarios, their control focus is different, and the performance differences of controllers are also significant. Therefore, for the "polyline" path scenario, choosing an appropriate lateral/longitudinal control method is particularly important.

Unlike the control focus of passenger car autonomous driving, in this structured or semi-structured "polyline" path scenario, control accuracy is often a very important indicator. The error of about 30 centimeters for passenger cars cannot meet the usage requirements. For the "polyline" path, if fine longitudinal control is not performed, it is difficult to ensure the accuracy requirements near the "inflection points", and considering obstacle avoidance and other requirements, these "inflection points" often have higher accuracy requirements.

Therefore, in the vehicle control process of the "polyline" path, how to improve the accuracy of longitudinal control and "inflection point" control is currently a hot topic and pain point in industry research.

**Summary of the Invention**

To solve the above technical problems, for vehicle control in the "polyline" path scenario, this method proposes a new vehicle control method based on the "polyline" path.

This invention provides the following technical solution:

a new vehicle control method based on "polyline" path, which comprises the following steps:

S100: obtain real-time pose information of the vehicle;

S200: calculate the driving direction of path segments based on the set of passing points;

S300: calculate the longitudinal linear velocity of path segments based on the set of passing points;

S400: calculate the angular velocity at "inflection point";

S500: calculate the angular velocity of path segments.

Preferably, real-time control of the vehicle is performed using the longitudinal linear velocity of the path segment, the angular velocity of the path segment, and the angular velocity at the "inflection point".

Preferably, in step S100, the real-time pose information of the vehicle is obtained through a GNSS antenna installed on the vehicle.

Preferably, in step S200,

the set of passing points for the vehicle is planned as $S_i(x_i, y_i)$, $i = 1,2, ..., N$, where $x_i$ and $y_i$ are the x-coordinate and y-coordinate components of the vehicle coordinate system origin in the world coordinate system, respectively;

the set of points contains N-1 path segments in total; for the i-th path segment, its path inclination angle $\theta_i$ is $\theta_i = \alpha \tan 2 (\Delta y_i, \Delta x_i) = \alpha \tan 2 (y_{i+1} - y_i, x_{i+1} - x_i)$, $i = 1,2, ..., N - 1$;

let $\Delta\theta_i = \theta_i - \theta_{i-1}$, i=2, 3,...,N-1, then

$$\begin{cases} \Delta\theta_i > 90°, & \text{the driving direction of the vehicle changes} \\ \Delta\theta_i \le 90°, & \text{the driving direction of the vehicle does not change} \end{cases}$$

based on the driving direction of the first path segment, the driving direction di of each path segment can be recursively determined, $d_i$=1,

$$\begin{cases} d_i = 1, & \text{forward driving} \\ d_i = -1, & \text{reverse driving} \end{cases}, \quad i = 1,2,..,N-1$$

Preferably, in step S300,

the set of passing points for the vehicle is planned as $S_i(x_i, y_i)$, $i$ = 1,2, ..., N, where $x_i$ and $y_i$ are the x-coordinate and y-coordinate components of the vehicle coordinate system origin in the world coordinate system, respectively,

the set of points contains N-1 path segments in total; for the i-th path segment, its path inclination angle $\theta_i$ is $\theta_i = a \tan 2$ $(\Delta y_i, \Delta x_i) = a \tan 2 (y_{i+1} - y_i, x_{i+1} - x_i)$, $i$ = 1,2, ..., N - 1;

with $S_i(x_i, y_i)$, $i$ = 1,2, ..., N - 1 as the origin, and the direction from $S_i(x_i, y_i)$ to $S_{i+1}(x_{i+1}, y_{i+1})$ as the positive X-axis, establish the path coordinate system $F_i$ following the right-hand rule for the positive Y-axis; given the current pose of the vehicle as $P_0(x_0, y_0, \theta_0)$, according to the plane coordinate transformation formula:

$$\begin{cases} x_{0i} = (x_0 - x_i)\cos\theta_i + (y_0 - y_i)\sin\theta_i \\ y_{0i} = -(x_0 - x_i)\sin\theta_i + (y_0 - y_i)\cos\theta_i \\ \theta_{0i} = \theta_0 - \theta_i \end{cases}$$

we can obtain the x-coordinate $x_{0i}$, y-coordinate $y_{0i}$, and attitude $\theta_{0i}$ of the vehicle in the path coordinate system $F_i$;

$x_{0i}$ represents the projection of the distance between the current pose $P_0(x_0, y_0, \theta_0)$ and the starting point $S_i(x_i, y_i)$ on the path segment $S_iS_{i+1}$ as the vehicle moves from the starting point $S_i(x_i, y_i)$ towards the target point $S_{i+1}(x_{i+1}, y_{i+1})$,

$xx_{0i}$ represents the projection of the distance between the current pose $P_0(x_0, y_0, \theta_0)$ and the target point $S_{i+1}(x_{i+1}, y_{i+1})$ on the path segment SiSi+1 as the vehicle moves from the starting point $S_i(x_i, y_i)$ towards the target point $S_{i+1}(x_{i+1},y_{i+1})$,

let $xx_{0i} = \|S_iS_{i+1}\| - x_{0i}$, then

$$\begin{cases} x_{0i} < 0, xx_{0i} > \|S_iS_{i+1}\|, & \text{indicating the vehicle has not yet reached the starting point } S_i \\ x_{0i} = 0, xx_{0i} = \|S_iS_{i+1}\|, & \text{indicating the vehicle is passing the starting point } S_i \\ 0 < x_{0i} < \|S_iS_{i+1}\|, 0 < x_{0i} < \|S_iS_{i+1}\|, & \text{indicating the vehicle is traveling on the } S_iS_{i+1} \\ x_{0i} = \|S_iS_{i+1}\|, xx_{0i} = 0, & \text{indicating the vehicle is passing the target point } S_{i+1} \\ x_{0i} > \|S_iS_{i+1}\|, xx_{0i} < 0, & \text{indicating the vehicle has passed the target point } S_{i+1} \end{cases}$$

where, the current pose $P_0$: $x_0$ - x-coordinate value in the world coordinate system, $y_0$ - y-coordinate value in the world coordinate system; $\theta_0$ - the inclination angle of the vehicle coordinate system (with the geometric center of the vehicle as the origin, the vehicle's heading direction as the positive X-axis, following the right-hand rule) in the world coordinate system, i.e., the current attitude of the vehicle;

$\|S_iS_{i+1}\|$: the distance between the starting point $S_i$ and the target point $S_{i+1}$;

$$v_{ia} = \begin{cases} v_{start}, x_{oi} \le 0 \\ v_{start} + \dfrac{v_{is} - v_{start}}{d_a} x_{oi}, 0 < x_{oi} \le d_a \\ v_{is}, x_{oi} > d_a \end{cases}$$

where, $v_{start}$: starting speed, if $|\Delta\theta_i| \le \theta_{min}$, $v_{start} = v_{is}$; if $|\Delta\theta_i| > \theta_{min}$ it is a set value;

$\theta_{min}$ is the set angle difference for same-direction path segments, theoretically 0, practically a small value;

$d_a$: acceleration distance, when $\|S_iS_{i+1}\| \le d_a + d_d$, $d_a = 0.5\|S_iS_{i+1}\|$; when $\|S_iS_{i+1}\| > d_a + d_d$, $d_a$ is a set value;

$v_{is}$: the set speed on the i-th path segment;

$$v_{id} = \begin{cases} v_{tmp}, xx_{oi} \le d_{min} \\ v_{tmp} + \dfrac{v_{is} - v_{tmp}}{d_d} x_{oi}, d_{min} < xx_{oi} \le d_d \\ v_{is}, xx_{oi} > d_d \end{cases}$$

where: $v_{tmp}$: intermediate variable; if $|\Delta\theta_{i+1}| \le \theta_{min} = v_{i+1,s}$; if $|\Delta\theta_{i+1}| > \theta_{min}$ is a set value;
$d_d$: deceleration distance, when $\|S_iS_{i+1}\| \le d_a + d_d$, $d_d = 0.5\|S_iS_{i+1}\|$; when $\|S_iS_{i+1}\| > d_a + d_d$, $d_d$ is a set value;
$d_{min}$: threshold longitudinal distance for switching between path segments, theoretically 0, practically set to a small value;
the absolute value of longitudinal linear velocity vi',

$$v_i' = \begin{cases} v_{ia}, & x_{oi} \le d_a \\ v_{id}, & xx_{oi} \le d_d \\ v_{imax}, & otherwise \end{cases}$$

longitudinal linear velocity $v_i = v_i'd_i$.

Preferably, in step S400,

$$\theta_{vi} = \begin{cases} \theta_i, & d_i = 1 \\ \theta_i - 180°, d_i = -1 \end{cases}$$

let the angle difference $\Delta\theta_{v0} = \theta_{vi} - \theta_0$, then
unrestricted angular velocity $\omega_{ei}'$,

$$\omega_{ei}' = \begin{cases} k_b\Delta\theta_{v0}, \Delta\theta_{v0} > \theta_b \\ k_s\Delta\theta_{v0}, \Delta\theta_{v0} < \theta_s \\ \Delta\theta_{v0}, otherwise \end{cases}$$

where, $k_b$: large angle difference rotation coefficient, a set value;
$\theta_b$: large angle error threshold, a set value;
$k_s$: small angle difference rotation coefficient, a set value;
$\theta_s$: small angle error threshold, a set value;

$$\omega_{ei} = \begin{cases} \omega_{\min} \frac{\omega'_{ei}}{|\omega'_{ei}|}, & |\omega'_{ei}| < \omega_{\min} \\ \omega_{\max} \frac{\omega'_{ei}}{|\omega'_{ei}|}, & |\omega'_{ei}| > \omega_{\max} \\ \omega'_{ei}, & \text{otherwise} \end{cases}$$

where, $\omega_{\min}$: minimum rotation angular velocity, a set value;

$\omega_{\max}$: maximum rotation angular velocity, a set value.

Preferably, in step S500, based on $y_{0i}$ and $\theta_{0i}$ from S200, where $y_{0i}$ is the current lateral position deviation, and $\theta_{0i}$ is the current yaw angle deviation; combined with the lateral control algorithm, the angular velocity $\omega_{mi}$ of the path segment is obtained.

Preferably, the lateral control algorithm is any one of pure pursuit, front axle feedback, rear axle feedback, LQR, and MPC.

Compared to existing technology, the beneficial effects of this invention are: it can achieve autonomous judgment of the driving direction in path segments under "polyline" path scenarios; it can calculate the longitudinal linear velocity in path segments under "polyline" path scenarios; it can calculate the angular velocity at "inflection points" under "polyline" path scenarios; this application can automatically plan the driving direction of the vehicle in each path segment based on the set of waypoints from path planning, thereby determining the driving pose of the vehicle; based on the driving pose, acceleration and deceleration control is performed on the route, which can automatically adjust the longitudinal linear velocity of each segment well; based on the driving pose, at the "inflection points", the vehicle rotates around its geometric center, minimizing errors to ensure the accuracy of subsequent straight path segments.

**Brief Description of Figures**

The figures are used to provide further understanding of this invention and form part of the specification. They are used to explain the invention together with the embodiments and do not constitute limitations on the invention. In the figures:

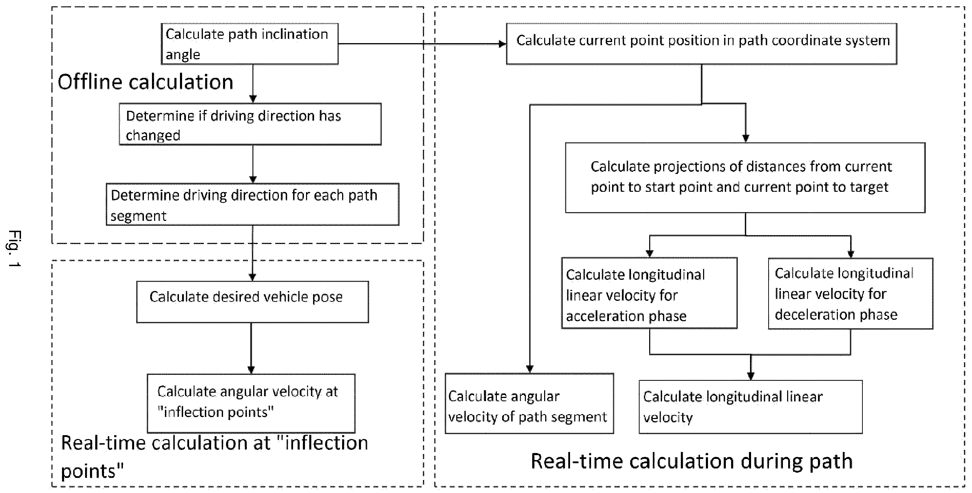

Figure 1 is a flow diagram of this invention.

**Detailed Description of Embodiments**

The following will clearly and completely describe the technical solutions in the embodiments of this invention in conjunction with the figures in the embodiments. Obviously, the described embodiments are only a part of the embodiments of this invention, not all of them. Based on the embodiments in this invention, all other embodiments obtained by those skilled in the art without creative effort are within the scope of protection of this invention.

**This invention provides a technical solution, with the specific flow diagram shown in Figure 1. The specific execution process of this method is as follows.**

A GNSS antenna needs to be installed on the vehicle body to obtain real-time pose information of the vehicle.

**1. Calculate the driving direction of each path segment based on the set of waypoints**

**1.1 Calculate the path inclination angle** $\theta_i$**:** In the planning module, the set of waypoints for the vehicle is $S_i(x_i, y_i)$, $i = 1,2,...,N$, where $x_i$ and $y_i$ are the x-coordinate and y-coordinate components of the origin of the vehicle coordinate system in the world coordinate system, respectively;

Then this point set contains N-1 path segments in total. For the i-th path segment, its path inclination angle $\theta_i$ is $\theta_i = \alpha\, tan\, 2\, (\Delta y_i, \Delta x_i) = \alpha\, tan\, 2\, (y_{i+1} - y_i, x_{i+1} - x_i)$, $i = 1,2,...,N - 1$;

**1.2 Determine if the driving direction changes:** In this structured or semi-structured scenario, considering the friction damage to the vehicle itself and the ground when rotating around its geometric center; Between two path segments, the angle of rotation of the vehicle around itself should be minimized. Based on this principle, let $\Delta\theta_i = \theta_i - \theta_{i-1}$, i = 2, 3, ..., N - 1, then

$$\begin{cases} \Delta\theta_i > 90°, & \text{the driving direction of the vehicle changes} \\ \Delta\theta_i \leq 90°, & \text{the driving direction of the vehicle does not change} \end{cases}$$

**1.3 Recursively determine the driving direction of each path segment:** Based on the driving direction of the first path segment, the driving direction $d_i$ of each path segment can be recursively determined,

$$\begin{cases} d_i = 1, & \text{forward driving} \\ d_i = -1, & \text{reverse driving} \end{cases}, \quad i = 1,2,..,N-1$$

## 2. Calculate the longitudinal linear velocity on the path segment based on the set of waypoints

**2.1 Calculate path inclination angle** $\theta_i$: In the planning module, the set of passing points planned for the vehicle is $S_i(x_i, y_i)$, $i$ = 1,2,...,N, where $x_i$ and $y_i$ are the x-coordinate and y-coordinate components of the origin of the vehicle coordinate system in the world coordinate system.

Then this point set contains N-1 path segments in total. For the i-th path segment, its path inclination angle $\theta_i$ is $\theta_i$ = *a tan* 2 ($\Delta y_i$, $\Delta x_i$) = *a tan* 2 ($y_{i+1} - y_i$, $x_{i+1} - x_i$), i = 1,2,...,N - 1;

**2.2 Calculate the pose** $P_0'(x_{0i}, y_{0i}, \theta_{0i})$ **of the current point in the path coordinate system Fi**

Then with $S_i(x_i, y_i)$, $i$ = 1,2,...,N - 1 as the origin, and $S_i(x_i, y_i)$ pointing to $S_{i+1}(x_{i+1}, y_{i+1})$ as the positive X-axis, establish the path coordinate system Fi according to the right-hand rule to determine the positive Y-axis. Assume the current pose of the vehicle is $P_0(x_0, y_0, \theta_0)$, according to the plane coordinate transformation formula

$$\begin{cases} x_{0i} = (x_0 - x_i) \cos \theta_i + (y_0 - y_i) \sin \theta_i \\ y_{0i} = -(x_0 - x_i) \sin \theta_i + (y_0 - y_i) \cos \theta_i \\ \theta_{0i} = \theta_0 - \theta_i \end{cases}$$

We can obtain the x-coordinate $x_{0i}$, y-coordinate $y_{0i}$, and attitude $\theta_{0i}$ of the vehicle in the path coordinate system $F_i$. In fact, $y_{0i}$ is the lateral position deviation at this time, $\theta_{0i}$ is the yaw angle deviation at this time;

**2.3 Calculate the projections** $x_{0i}$, $xx_{0i}$ **of the distance between the current pose** $P_0(x_0, y_0, \theta_0)$ **and the starting point** $S_i(x_i, y_i)$**, and the distance between the current pose** $P_0(x_0, y_0, \theta_0)$ **and the target point** $S_{i+1}(x_{i+1}, y_{i+1})$ **on the path segment:**

$x_{0i}$ indicates the projection of the distance between the current pose $P_0(x_0, y_0, \theta_0)$ and the starting point $S_i(x_i, y_i)$ on the path segment $S_i S_{i+1}$ in the process of the vehicle driving from the starting point $S_i(x_i, y_i)$ towards the target point $S_{i+1}(x_{i+1}, y_{i+1})$,

$xx_{0i}$ indicates the projection of the distance between the current pose $P_0(x_0, y_0, \theta_0)$ and the target point $S_{i+1}(x_{i+1}, y_{i+1})$ on the path segment $S_i S_{i+1}$ in the process of the vehicle driving from the starting point $S_i(x_i, y_i)$ towards the target point $S_{i+1}(x_{i+1}, y_{i+1})$,
Let $xx_{0i} = \|S_i S_{i+1}\| - x_{0i}$, then

$$\begin{cases} x_{0i} < 0, xx_{0i} > \|S_i S_{i+1}\|, & \text{indicating the vehicle has not yet reached the starting point } S_i \\ x_{0i} = 0, xx_{0i} = \|S_i S_{i+1}\|, & \text{indicating the vehicle is passing the starting point } S_i \\ 0 < x_{0i} < \|S_i S_{i+1}\|, 0 < x_{0i} < \|S_i S_{i+1}\|, & \text{indicating the vehicle is traveling on the } S_i S_{i+1} \\ x_{0i} = \|S_i S_{i+1}\|, \ xx_{0i} = 0, & \text{indicating the vehicle is passing the target point } S_{i+1} \\ x_{0i} > \|S_i S_{i+1}\|, \ xx_{0i} < 0, & \text{indicating the vehicle has passed the target point } S_{i+1} \end{cases}$$

Where, the current pose $P_0$: $x_0$ - x-coordinate value in the world coordinate system, $y_0$ - y-coordinate value in the world coordinate system; $\theta_0$ - inclination angle of the vehicle coordinate system (with the geometric center of the vehicle as the origin, the vehicle heading direction as the positive X-axis, conforming to the right-hand rule) in the world coordinate system, i.e. the current attitude of the vehicle;

$\|S_i S_{i+1}\|$: distance between the starting point $S_i$ and the target point $S_{i+1}$;

**2.4 Calculate the** longitudinal linear **velocity** $v_{ia}$ **during the acceleration phase** based on $x_{0i}$**:**

$$v_{ia} = \begin{cases} v_{start}, x_{oi} \le 0 \\ v_{start} + \dfrac{v_{is} - v_{start}}{d_a} x_{oi}, 0 < x_{oi} \le d_a \\ v_{is}, x_{oi} > d_a \end{cases}$$

where, $v_{start}$: starting speed, if $|\Delta\theta_i| \le \theta_{min}$, $v_{start} = v_{is}$; if $|\Delta\theta_i| > \theta_{min}$ rt is a set value;

$\theta_{min}$ is the set angle difference for same-direction path segments, theoretically 0, practically a small value;

$d_a$: acceleration distance, when $\|S_iS_{i+1}\| \le d_a + d_d$, $d_a = 0.5\|S_iS_{i+1}\|$; when $\|S_iS_{i+1}\| > d_a + d_d$, $d_a$ is a set value;

$v_{is}$: the set speed on the i-th path segment;

2.5 **Calculate the** longitudinal linear **velocity** $v_{id}$ **during the deceleration phase** based on **xx$_{0i}$**:

$$v_{id} = \begin{cases} v_{tmp}, xx_{oi} \le d_{min} \\ v_{tmp} + \dfrac{v_{is} - v_{tmp}}{d_d} x_{oi}, doi_{d_{min}} \\ v_{is}, xx_{oi} > d_d \end{cases}$$

where, $v_{tmp}$: intermediate variable;
if $|\Delta\theta_{i+1}| \le \theta_{min} = v_{i+1,s}$; if $|\Delta\theta_{i+1}| > \theta_{min}$ is a set value;
$d_d$: deceleration distance, when $\|S_iS_{i+1}\| \le d_a + d_d$, $d_d = 0.5\|S_iS_{i+1}\|$; when $\|S_iS_{i+1}\| > d_a + d_d$, $d_d$ is a set value;
$d_{min}$: threshold longitudinal distance for switching between path segments, theoretically 0, practically set to a small value;

**2.6 Calculate the longitudinal linear velocity** $v_i$
Absolute value of longitudinal linear velocity $v_i'$

$$v_i' = \begin{cases} v_{ia}, & x_{oi} \le d_a \\ v_{id}, & xx_{oi} \le d_d \\ v_{imax} \end{cases}$$

Longitudinal linear velocity $v_i = v_i'd_i$.

**3. Calculate the angular velocity at "inflection points"**

**3.1 Calculate the desired attitude** $\theta_{vi}$ **of the vehicle**

$$\theta_{vi} = \begin{cases} \theta_i, & d_i = 1 \\ \theta_i - 180°, & d_i = -1 \end{cases}$$

**3.2 Calculate the angular velocity** $\omega_{ei}$ **of the vehicle**

Let the angle difference $\Delta\theta_{v0} = \theta_{vi} - \theta_0$, then
unrestricted angular velocity $\omega_{ei}'$,

$$\omega_{ei}' = \begin{cases} k_b\Delta\theta_{v0}, \Delta\theta_{v0} > \theta_b \\ k_s\Delta\theta_{v0}, \Delta\theta_{v0} < \theta_s \\ \Delta\theta_{v0}, otherwise \end{cases}$$

where, $k_b$: large angle difference rotation coefficient, a set value;

$\theta_b$: large angle error threshold, a set value;

$k_s$: small angle difference rotation coefficient, a set value;

$\theta_s$: small angle error threshold, a set value;

$$\omega_{ei} = \begin{cases} \omega_{min} \frac{\omega'_{ei}}{|\omega'_{ei}|}, & |\omega'_{ei}| < \omega_{min} \\ \omega_{max} \frac{\omega'_{ei}}{|\omega'_{ei}|}, & |\omega'_{ei}| > \omega_{max} \\ \omega'_{ei}, & \text{otherwise} \end{cases}$$

where, $\omega_{min}$: minimum rotation angular velocity, a set value;

$\omega_{max}$: maximum rotation angular velocity, a set value.

### 4. Calculate the angular velocity on path segments

With the lateral position deviation $y_{0i}$ and yaw angle deviation $\theta_{0i}$ from 2.2, the angular velocity $\omega_{mi}$ on path segments can be obtained according to common lateral control algorithms.

Common lateral control algorithms include pure pursuit, front axle feedback, rear axle feedback, LQR and MPC. The first two are control laws derived from vehicle geometric constraint relationships, rear axle feedback is a control law derived based on Lyapunov stability criteria, LQR (Linear Quadratic Regulator) and MPC (Model Predictive Control) are two common methods for solving first-order linear state equations. The former is a full state feedback control, while the latter is a rolling optimization control. Both are based on minimizing a weighted cost function of state vectors and inputs as the optimization objective to find the optimal control solution.

### 5. Real-time vehicle control based on calculation results

In this embodiment, through the GNSS antenna installed on the vehicle to obtain real-time pose information of the vehicle, after going through the steps in the control process of this application, the calculated angular velocity at "inflection points", longitudinal linear velocity on path segments and angular velocity on path segments are obtained. The vehicle is controlled in real time based on the obtained angular velocity at "inflection points", longitudinal linear velocity on path segments and angular velocity on path segments, thereby achieving lateral and longitudinal control on path segments and fine control at "inflection points".

It should be noted that in this document, relational terms such as first and second are only used to distinguish one entity or operation from another entity or operation, and do not necessarily require or imply any actual relationship or order between these entities or operations. Moreover, the terms "include", "contain" or any other variants thereof are intended to cover non-exclusive inclusion, so that a process, method, article or device that includes a series of elements not only includes those elements, but also includes other elements not explicitly listed, or also includes elements inherent to such process, method, article or device.

Finally, it should be noted that the above description is only a preferred embodiment of this invention and is not intended to limit the invention. Although the invention has been described in detail with reference to the preceding embodiments, for those skilled in the art, modifications can still be made to the technical solutions described in the preceding embodiments, or equivalent replacements can be made to some technical features thereof. Any modifications, equivalent replacements, improvements, etc. made within the spirit and principles of this invention should be included within the scope of protection of this invention.

### Claims

1.    A new vehicle control method based on "polyline" path, **characterized by** including the following steps:

    S100: obtain real-time pose information of the vehicle;
    S200: calculate the driving direction of path segments based on the set of passing points;
    S300: calculate the longitudinal linear velocity of path segments based on the set of passing points;
    S400: calculate the angular velocity at "inflection point";
    S500: calculate the angular velocity of path segments.

2.    The new vehicle control method based on "polyline" path according to claim 1, **characterized in that** real-time control of the vehicle is performed using the longitudinal linear velocity of the path segment, the angular velocity of the path segment, and the angular velocity at the "inflection point".

3. The new vehicle control method based on "polyline" path according to claim 1, **characterized in that** in step S100, the real-time pose information of the vehicle is obtained through a GNSS antenna installed on the vehicle.

4. The new vehicle control method based on "polyline" path according to claim 1, **characterized in that** in step S200,

the set of passing points for the vehicle is planned as $S_i(x_i, y_i)$, $i = 1,2, ..., N$, where $x_i$ and $y_i$ are the x-coordinate and y-coordinate components of the vehicle coordinate system origin in the world coordinate system, respectively; the set of points contains N-1 path segments in total; for the i-th path segment, its path inclination angle $\theta_i$ is $\theta_i = a$ tan 2 $(\varDelta y_i, \varDelta x_i) = a$ tan 2 $(y_{i+1} - y_i, x_{i+1} - x_i)$, $i = 1,2, ..., N - 1$;
let $\Delta\theta_i = \theta_i - \theta_{i-1}$, i=2, 3,...,N-1, then

$$\begin{cases} \varDelta\theta_i > 90°, & \text{the driving direction of the vehicle changes} \\ \varDelta\theta_i \leq 90°, & \text{the driving direction of the vehicle does not change} \end{cases}$$

based on the driving direction of the first path segment, the driving direction di of each path segment can be recursively determined, $d_i = 1$,

$$\begin{cases} d_i = 1, & \text{forward driving} \\ d_i = -1, & \text{reverse driving} \end{cases}, \quad i = 1,2,..,N-1$$

5. The new vehicle control method based on "polyline" path according to claim 1, **characterized in that** in step S300,

the set of passing points for the vehicle is planned as $S_i(x_i, y_i)$, $i = 1,2, ..., N$, where $x_i$ and $y_i$ are the x-coordinate and y-coordinate components of the vehicle coordinate system origin in the world coordinate system, respectively; the set of points contains N-1 path segments in total; for the i-th path segment, its path inclination angle $\theta_i$ is $\theta_i = a$ tan 2 $(\varDelta y_i, \varDelta x_i) = a$ tan 2 $(y_{i+1} - y_i, x_{i+1} - x_i)$, $i = 1,2, ..., N - 1$;
with $S_i(x_i, y_i)$, $i = 1,2, ..., N - 1$ as the origin, and the direction from $S_i(x_i, y_i)$ to $S_{i+1}(x_{i+1}, y_{i+1})$ as the positive X-axis, establish the path coordinate system $F_i$ following the right-hand rule for the positive Y-axis; given the current pose of the vehicle as $P_0(x_0, y_0, \theta_0)$, according to the plane coordinate transformation formula:

$$\begin{cases} x_{0i} = (x_0 - x_i)\cos\theta_i + (y_0 - y_i)\sin\theta_i \\ y_{0i} = -(x_0 - x_i)\sin\theta_i + (y_0 - y_i)\cos\theta_i \\ \theta_{0i} = \theta_0 - \theta_i \end{cases}$$

we can obtain the x-coordinate $x_{0i}$, y-coordinate $y_{0i}$, and attitude $\theta_{0i}$ of the vehicle in the path coordinate system $F_i$;
$x_{0i}$ represents the projection of the distance between the current pose $P_0(x_0, y_0, \theta_0)$ and the starting point $S_i(x_i, y_i)$ on the path segment $S_iS_{i+1}$ as the vehicle moves from the starting point $S_i(x_i, y_i)$ towards the target point $S_{i+1}(x_{i+1}, y_{i+1})$,
$xx_{0i}$ represents the projection of the distance between the current pose $P_0(x_0, y_0, \theta_0)$ and the target point $S_{i+1}(x_{i+1}, y_{i+1})$ on the path segment SiSi+1 as the vehicle moves from the starting point $S_i(x_i, y_i)$ towards the target point $S_{i+1}(x_{i+1}, y_{i+1})$,

let $xx_{0i} = \|S_iS_{i+1}\| - x_{0i}$, then

$$\begin{cases} x_{0i} < 0, xx_{0i} > \|S_iS_{i+1}\|, & \text{indicating the vehicle has not yet reached the starting point } S_i \\ x_{0i} = 0, xx_{0i} = \|S_iS_{i+1}\|, & \text{indicating the vehicle is passing the starting point } S_i \\ 0 < x_{0i} < \|S_iS_{i+1}\|, 0 < x_{0i} < \|S_iS_{i+1}\|, & \text{indicating the vehicle is traveling on the } S_iS_{i+1} \\ x_{0i} = \|S_iS_{i+1}\|, xx_{0i} = 0, & \text{indicating the vehicle is passing the target point } S_{i+1} \\ x_{0i} > \|S_iS_{i+1}\|, xx_{0i} < 0, & \text{indicating the vehicle has passed the target point } S_{i+1} \end{cases}$$

where, the current pose $P_0$: $x_0$ - x-coordinate value in the world coordinate system, $y_0$ - y-coordinate value in the world coordinate system; $\theta_0$ - the inclination angle of the vehicle coordinate system (with the geometric center of the vehicle as the origin, the vehicle's heading direction as the positive X-axis, following the right-hand rule) in the world coordinate system, i.e., the current attitude of the vehicle; $\|S_iS_{i+1}\|$: the distance between the starting point $S_i$ and the target point $S_{i+1}$;

$$v_{ia} = \begin{cases} v_{start}, x_{oi} \leq 0 \\ v_{start} + \dfrac{v_{is} - v_{start}}{d_a} x_{oi}, 0 < x_{oi} \leq d_a \\ v_{is}, x_{oi} > d_a \end{cases}$$

where, $v_{start}$: starting speed, if $|\Delta\theta_i| \leq \theta_{min}$, $v_{start} = v_{is}$; if $|\Delta\theta_i| > \theta_{min}$ rt is a set value;
$\theta_{min}$ is the set angle difference for same-direction path segments, theoretically 0, practically a small value;
$d_a$: acceleration distance, when $\|S_iS_{i+1}\| \leq d_a + d_d$, $d_a = 0.5\|S_iS_{i+1}\|$; when $\|S_iS_{i+1}\| > d_a + d_d$, $d_a$ is a set value;
$v_{is}$: the set speed on the i-th path segment;

$$v_{id} = \begin{cases} v_{tmp}, xx_{oi} \leq d_{min} \\ v_{tmp} + \dfrac{v_{is} - v_{tmp}}{d_d} x_{oi}, d_{min} < xx_{oi} \leq d_d \\ v_{is}, xx_{oi} > d_d \end{cases}$$

where: $v_{tmp}$: intermediate variable; if $|\Delta\theta_{i+1}| \leq \theta_{min} = v_{i+1,s}$; if $|\Delta\theta_{i+1}| > \theta_{min}$ is a set value;
$d_d$: deceleration distance, when $\|S_iS_{i+1}\| \leq d_a + d_d$, $d_d = 0.5\|S_iS_{i+1}\|$; when $\|S_iS_{i+1}\| > d_a + d_d$, $d_d$ is a set value;
$d_{min}$: threshold longitudinal distance for switching between path segments, theoretically 0, practically set to a small value;
the absolute value of longitudinal linear velocity vi',

$$v_i' = \begin{cases} v_{ia}, & x_{oi} \leq d_a \\ v_{id}, & xx_{oi} \leq d_d \\ v_{imax}, & otherwise \end{cases}$$

longitudinal linear velocity $v_i = v_i'd_i$.

6. The new vehicle control method based on "polyline" path according to claim 1, **characterized in that** in step S400,

$$\theta_{vi} = \begin{cases} \theta_i \cdot d_i = 1 \\ \theta_i - 180°, d_i = -1 \end{cases}$$

let the angle difference $\Delta\theta_{v0} = \theta_{vi} - \theta_0$, then
unrestricted angular velocity $\omega_{ei}'$,

$$\omega_{ei}' = \begin{cases} k_b\Delta\theta_{v0}, \Delta\theta_{v0} > \theta_b \\ k_s\Delta\theta_{v0}, \Delta\theta_{v0} < \theta_s \\ \Delta\theta_{v0}, otherwise \end{cases}$$

where, $k_b$: large angle difference rotation coefficient, a set value;
$\theta_b$: large angle error threshold, a set value;
$k_s$: small angle difference rotation coefficient, a set value;
$\theta_s$: small angle error threshold, a set value;

$$\omega_{ei} = \begin{cases} \omega_{\min} \frac{\omega'_{ei}}{|\omega'_{ei}|}, & |\omega'_{ei}| < \omega_{\min} \\ \omega_{\max} \frac{\omega'_{ei}}{|\omega'_{ei}|}, & |\omega'_{ei}| > \omega_{\max} \\ \omega'_{ei}, & \text{otherwise} \end{cases}$$

where, $\omega_{\min}$: minimum rotation angular velocity, a set value;

$\omega_{\max}$: maximum rotation angular velocity, a set value.

7. The new vehicle control method based on "polyline" path according to claim 1, **characterized in that** in step S500, based on $y_{0i}$ and $\theta_{0i}$ from S200, where $y_{0i}$ is the current lateral position deviation, and $\theta_{0i}$ is the current yaw angle deviation; combined with the lateral control algorithm, the angular velocity $\omega_{mi}$ of the path segment is obtained.

8. The new vehicle control method based on "polyline" path according to claim 7, **characterized in that** the lateral control algorithm is any one of pure pursuit, front axle feedback, rear axle feedback, LQR, and MPC.

Fig. 1

12

**Offline calculation**

Calculate path inclination angle

Determine if driving direction has changed

Determine driving direction for each path segment

**Real-time calculation at "inflection points"**

Calculate desired vehicle pose

Calculate angular velocity at "inflection points"

**Real-time calculation during path**

Calculate current point position in path coordinate system

Calculate projections of distances from current point to start point and current point to target

Calculate longitudinal linear velocity for acceleration phase

Calculate longitudinal linear velocity for deceleration phase

Calculate angular velocity of path segment

Calculate longitudinal linear velocity

## INTERNATIONAL SEARCH REPORT

| International application No. |
| --- |
| **PCT/CN2024/112974** |

### A. CLASSIFICATION OF SUBJECT MATTER

G05D 1/43(2024.01)i; G05D 1/65(2024.01)i; G05D 1/644(2024.01)i

According to International Patent Classification (IPC) or to both national classification and IPC

### B. FIELDS SEARCHED

Minimum documentation searched (classification system followed by classification symbols)

IPC: G05D1/-

Documentation searched other than minimum documentation to the extent that such documents are included in the fields searched

Electronic data base consulted during the international search (name of data base and, where practicable, search terms used)

CNTXT; CNKI; ENTXT; USTXT: 折线, 路段, 子路经, 折点, 节点, 转角点, 顶点, 交点, 汇合点, 交汇点, 车辆, 角速度, 线速度, polyline, road segment, sub path, point, node, turning point, vertex, vehicle, angular velocity, linear velocity

### C. DOCUMENTS CONSIDERED TO BE RELEVANT

| Category* | Citation of document, with indication, where appropriate, of the relevant passages | Relevant to claim No. |
| --- | --- | --- |
| PX | CN 117850413 A (SHANGHAI ALLYNAV TECHNOLOGY CO., LTD.) 09 April 2024 (2024-04-09)<br>claims 1-8 | 1-8 |
| X | CN 116954218 A (XIAMEN UMS INFORMATION TECHNOLOGY CO., LTD.) 27 October 2023 (2023-10-27)<br>description, paragraphs 0033-0055, and figures 1-8 | 1-3, 7-8 |
| A | CN 104181923 A (WUHAN UNIVERSITY) 03 December 2014 (2014-12-03)<br>entire document | 1-8 |
| A | CN 118339429 A (RENAULT S.A.S.) 12 July 2024 (2024-07-12)<br>entire document | 1-8 |
| A | JP H04190283 A (HITACHI, LTD.) 08 July 1992 (1992-07-08)<br>entire document | 1-8 |
| A | US 2021300410 A1 (HERE GLOBAL B.V.) 30 September 2021 (2021-09-30)<br>entire document | 1-8 |

☐ Further documents are listed in the continuation of Box C.  ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **24 October 2024** | **30 October 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/112974**

| Patent document cited in search report | | | Publication date (day/month/year) | Patent family member(s) | | | Publication date (day/month/year) |
|---|---|---|---|---|---|---|---|
| CN | 117850413 | A | 09 April 2024 | None | | | |
| CN | 116954218 | A | 27 October 2023 | None | | | |
| CN | 104181923 | A | 03 December 2014 | None | | | |
| CN | 118339429 | A | 12 July 2024 | KR | 20240116517 | A | 29 July 2024 |
| | | | | WO | 2023099339 | A1 | 08 June 2023 |
| JP | H04190283 | A | 08 July 1992 | JP | 2859954 | B2 | 24 February 1999 |
| US | 2021300410 | A1 | 30 September 2021 | US | 11420649 | B2 | 23 August 2022 |

Form PCT/ISA/210 (patent family annex) (July 2022)